# EUROPEAN PATENT APPLICATION

(11) **EP 4 621 249 A1**
(43) Date of publication of application: **24.09.2025**
(21) Application number: 24164703.1
(22) Date of filing: 20.03.2024
(51) Int. Cl.: F16B 5/12

(54) **FASTENING DEVICE**

(71) Applicant: Newfrey LLC, New Britain, CT 06053 (US)
(72) Inventor: KEMPF, Christian, 35394 Giessen (DE); ROSEMANN, Frank, 35394 Giessen (DE)
(74) Representative: Witte, Weller & Partner Patentanwälte mbB

(57) **Abstract**

A fastening device (10) for fastening to a web portion of a component, comprising (i) a U-shaped fastener body (20) having a body base portion, a first body leg portion, and a second body leg portion, wherein the first and second body leg portions each extend from the body base portion such that a base receptacle (B) is defined between the first and second body leg portions (26, 30), and (ii) a U-shaped clamping portion (22) having a clamping base portion, a first clamping leg portion, and a second clamping leg portion, wherein the first and second clamping leg portions each extend from the clamping base portion such that a clamping receptacle (C) for receiving the web portion (16) is defined between the first and second clamping leg portions (62, 66), wherein the clamping portion (22) is configured to be inserted in an insertion direction (z) into the base receptacle (B) of the fastener body (20), so as to establish a clamping position (PC), wherein the first and second clamping leg portions (62, 66) are pressed together in the clamping position (PC) by the first and second body leg portions (26, 30), wherein the clamping portion (22) is held in the clamping position (PC) by a latch (42, 46) of a main latching arrangement (36), and wherein the latch (42, 46) is movable with regard to the fastener body (20) and is connected to the fastener body (20) by a hinge (44, 48).

## Description

The present disclosure relates to a fastening device for fastening to a web portion of a component.

In the field of fastening devices, it is known to fasten a plastic clip to a metal component, e.g. to a sheet of an automotive body or to a stud projecting from such a metal sheet component.

In particular, it is known to grip the component by a latching engagement, e.g. on a thread of a stud. It is also known to provide a metal clip or a plastic clip with barbs in order to grip the component.

Document DE 10 20 2022 108 601 A1 discloses a device for fastening a component to a carrier component, particularly to an automotive body part of a vehicle period. Particularly, the device is suitable for being fastened to a welding stud, and an actuation element is used to press the device onto the stud.

Document DE 10 2012 106 775 A1 discloses a clip for fastening a component to a flat workpiece. The clip has a reception slot, and a latching finger protrudes into the reception slot. The latching finger can be released by a release lever.

Another clip for fastening to a strip or rib, in particular on a motor vehicle, comprises a single-piece body made of plastic which has a retaining region. The retaining region has a receiving slot, guide sections and a locking finger. The locking finger has an insert that forms a tongue projecting from the free end of the locking finger (EP 2 405 418 A2).

Document DE 10 2018 130 665 A1 discloses a bracket for fastening to an edge of an element, in particular to an edge of a sheet of a vehicle. The bracket includes a clamping element which has essentially a U-shape. Further, the bracket includes a carrier having two arms which define a receptacle for the clamping element. Some parts of legs of the clamping element are provided with soft plastic material for gripping the edge.

Against the above background, it is the object of the present disclosure to provide an improved fastening device.

This object is achieved by a fastening device for fastening to a web portion of a component, comprising (i) a U-shaped fastener body having a body base portion, a first body leg portion, and a second body leg portion, wherein the first and second body leg portions each extend from the body base portion such that a base receptacle is defined between the first and second body leg portions, and (ii) a U-shaped clamping portion having a clamping base portion, a first clamping leg portion, and a second clamping leg portion, wherein the first and second clamping leg portions each extend from the clamping base portion such that a clamping receptacle for receiving the web portion is defined between the first and second clamping leg portions, wherein the clamping portion is configured to be inserted in an insertion direction into the base receptacle of the fastener body so as to establish a clamping position, wherein the first and second clamping leg portions are pressed together in the clamping position by the first and second body leg portions, wherein the clamping portion is held in the clamping position by a latch of a main latching arrangement, and wherein the latch is movable with regard to the fastener body and is connected to the fastener body by a hinge.

The present fastening device allows to press the clamping portion together by a clamping force of the first and second body leg portions, which are preferably elastically pressed apart when the clamping portion is inserted into the base receptacle. On the other hand, the clamping portion is held in the clamping position by a latch which is movable with regard to the fastener body and is connected to the fastener body by a hinge. Therefore, the clamping position of the clamping portion can be firmly maintained in a manner which is essentially independent of the clamping pressing force of the first and second body leg portions. Therefore, de-clamping can be prevented. On the other hand, a high pressing force can be provided by the first and second body leg portions which press the clamping portion together so as to firmly fasten the fastening device to a web portion.

The web portion can have an arbitrary shape. Typically, it is an essentially sheet-shaped or box-shaped web portion. The web portion, however, may also be formed by any regular shape, or by a circular shape such as a stud (e.g. a welding stud).

The material of the web portion, particularly an outer surface thereof, is preferably made of a relatively soft material which is significantly softer than metal.

However, in other embodiments, and depending on a fastening arrangement provided on the inner sides of the clamping leg portions, it is also possible to fasten the fastening device to web portions made of other materials, e.g. metal.

In the clamping position, the clamping portion is configured to clamp the web portion of the component between the first and second clamping leg portions.

The clamping position is a position in which the clamping portion is fully inserted into the fastener body.

The latch is preferably formed as a tongue that is pivotable about the hinge at a body leg portion. Preferably, each body leg portion has a latch which projects into the base receptacle.

Each latch has a contact surface which is contacted by the clamping portion when being inserted into the base receptacle. The contact surface of the latch extends in each case transversely and downwardly, i.e. in other words obliquely, so that the latch can be deflected from its protruding position elastically into a deflection position, until the latch, in the clamping position, engages latchingly a latching shoulder provided on the clamping portion.

The latching shoulder is preferably provided on a clamping leg portion of the clamping portion.

The hinge by means of which the latch is connected to the fastener body, is preferably an elastic/flexure hinge. Preferably, the hinge is formed at an upper portion of the respective body leg portion, so that the latch may extend in a downward direction (i.e. in a direction to the body base portion).

The object is, thus, achieved in full.

The latch may be formed as a component separate from the fastener body, and may be mounted to the fastener body.

However, in a preferred embodiment, the latch is formed integrally with the fastener body.

Therefore, the fastening device can be produced easily, e.g. by injecting molding or the like.

In a preferred embodiment, the fastener body is integrally made of a plastic material.

In a preferred embodiment, the clamping portion is integrally made of a plastic material.

The plastic material of the fastener body and the plastic material of the clamping portion may be different materials. Preferably, the plastic materials of the fastener body and of the clamping portion are identical. One example of the plastic material is polyamide.

Preferably, the fastening device consists only of the fastener body and of the clamping portion.

Further, it is preferred if the first and second body leg portions are each connected to the base body portion by a first body leg hinge and a second body leg hinge, respectively.

Further, it is preferred if the first and second clamping leg portions are each connected to the clamping base portion by a first clamping leg hinge and a second clamping leg hinge, respectively.

A stiffness of the first and second clamping leg hinges is preferably lower than a stiffness of the first and second body leg hinges.

Therefore, it is possible to convey a clamping force of the body leg portions to the clamping portion provided between the body leg portions.

In another preferred embodiment, at least one of the first and second clamping leg portions is provided with a fastening arrangement for securely fastening to the web portion in the clamping position, wherein it is preferred if the fastening arrangement comprises at least one barb.

In other embodiments, the fastening arrangement may comprise, additionally or alternatively, a soft plastic material (e.g. TPE, EPDM or the like).

Further, it is preferred if the fastener body is provided with a mounting arrangement, wherein it is preferred if the mounting arrangement comprises a through hole in the body base portion.

With the mounting arrangement, it is possible to mount a second component to the web portion, via the fastening device.

In one embodiment, the through hole is adapted to receive a cable tie for mounting an elongate second component to the fastening device.

Further, it is preferred if at least one of the first and second body leg portions comprises a latch deflection recess for allowing a deflection of the latch in a transversal direction which is perpendicular to the insertion direction in which the clamping portion is inserted into the base receptacle.

Preferably, the latch deflection recess is formed by a through opening in the respective body leg portion, wherein the latch (tongue) extends from an upper end (distal end from the body base portion) of the through opening.

The through opening also has the advantage that the position of the latch (tongue) can be easily inspected from the outside of the fastening device, for example for determining whether the clamping portion has been fully inserted into the base receptacle for establishing the clamping position.

Further, it is preferred if the clamping portion, when being partially inserted into the base receptacle, is held in an intermediate position by an intermediate latching arrangement.

In the intermediate position, it is easily possible to insert the web portion into the clamping receptacle. Preferably, it is even possible to withdraw the web portion from the clamping receptacle.

In this case, it is preferred if the intermediate latching arrangement comprises at least one intermediate latching nose and at least one intermediate latching recess, wherein the intermediate latching recess is formed as an elongated recess which is configured to hold the intermediate latching nose of clamping portion in the intermediate position and to allow to freely further insert the clamping portion into the clamping position.

In other words, when the clamping portion is moved from the intermediate position to the clamping position, the intermediate latching arrangement does not impede the relative movement between the fastener body and the clamping portion. Preferably, the intermediate latching nose, during such relative movement, moves freely within the elongated recess.

Further, it is preferred if the intermediate latching nose is provided on the fastener body, wherein the intermediate latching recess is provided on the clamping portion.

The intermediate latching recess is preferably formed on an outside of each clamping leg portion, wherein the depth of the intermediate latching recess is smaller than a thickness of the clamping leg portion.

Further, it is preferred if the clamping base portion lies against the latch of the main latching arrangement in the intermediate position.

This embodiment allows to restrain the clamping position between the essentially non-deflected latch of the main latching arrangement and the engagement contact of the intermediate latching arrangement. In other words, in the intermediate position, the clamping portion can on the one hand not be withdrawn from the fastener body (due to the intermediate latching engagement), and cannot move to the clamping position easily. Thus, a relatively high force is necessary in order to move the clamping portion from the intermediate position to the clamping position, as this implies to elastically deflect the latch (tongue) of the main latching arrangement.

In addition, it is preferred if the fastener body and the first and second body leg portions are integrally formed, wherein first and second body leg hinges therebetween are each formed by a respective reduced thickness portion of the fastener body.

It is also preferred if the clamping portion and the first and second clamping leg portions are integrally formed, wherein first and second clamping leg hinges therebetween are each formed by a respective reduced thickness portion of the clamping portion.

In addition, it is preferred if the latch is arranged between the intermediate latching nose and the body base portion in the insertion direction.

Also, it is preferred if a main latching shoulder of the main latching arrangement is arranged between an intermediate latching recess of the intermediate latching arrangement and the clamping base portion in the insertion direction.

It will be understood that the afore-mentioned features and to be described hereinafter cannot only be used in the respectively given combination, but also in different combinations or independently, without leaving the scope of the present invention.

Further features and advantages of the invention can be taken from the subsequent description of preferred embodiments with reference to the drawings. In the drawings:
- Fig. 1: is a cross sectional view of a fastening device according to a first embodiment in a state fastened to a web portion of a component;
- Fig. 2: is a front view of a fastener body and a clamping portion of the fastening device of the first embodiment;
- Fig. 3: is a perspective view of the fastener body and the clamping portion of the fastening device of Fig. 1;
- Fig. 4: is a front view of the fastening device in an intermediate position;
- Fig. 5: is a perspective view of the fastening device in the intermediate position;
- Fig. 6: is a cross sectional view of the fastening device in the intermediate position;
- Fig. 7: is a side view of the fastening device in the intermediate position;
- Fig. 8: is a top view of the fastening device in the intermediate position;
- Fig. 9: is a front view of the fastening device in a clamping position;
- Fig. 10: is a perspective view of the fastening device in the clamping position;
- Fig. 11: is a cross sectional view of the fastening device in the clamping position; and
- Fig. 12: is a perspective view of the fastening device in the intermediate position with a cable tie mounted thereto.

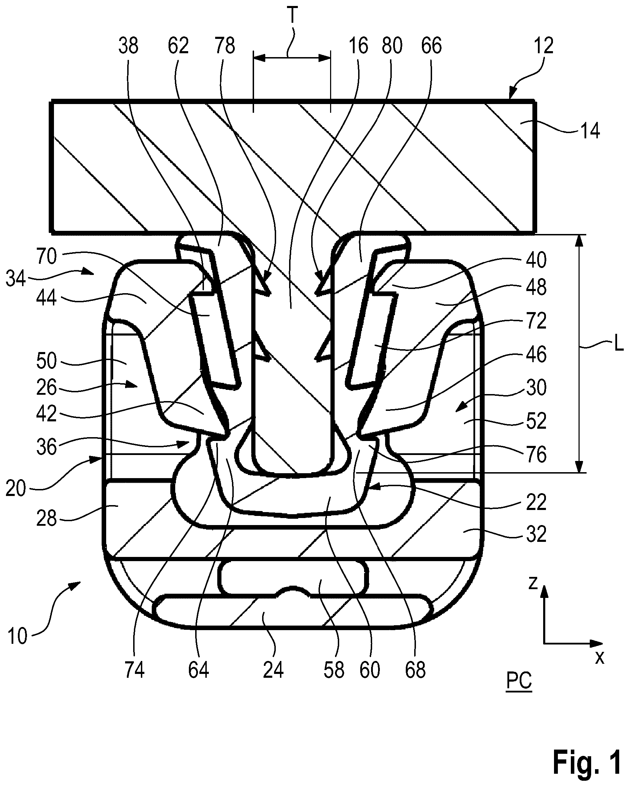

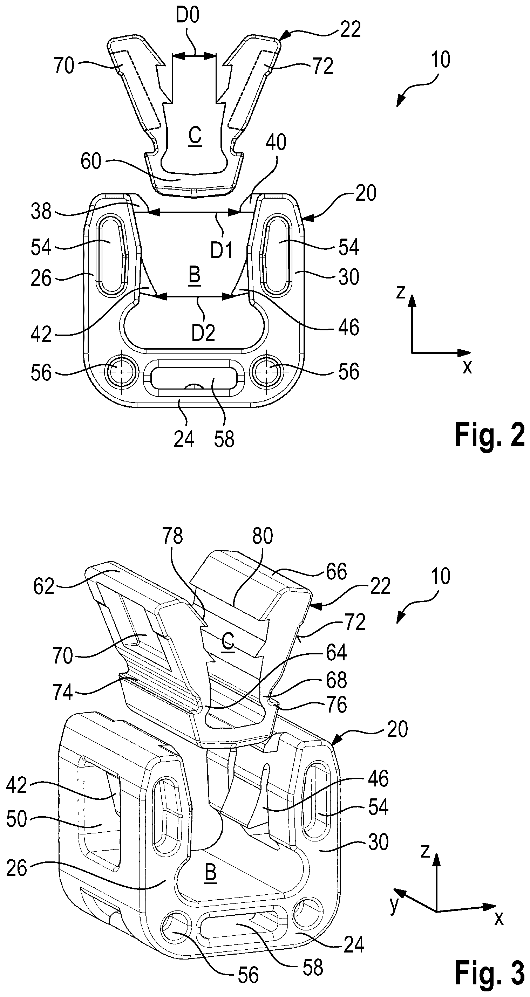

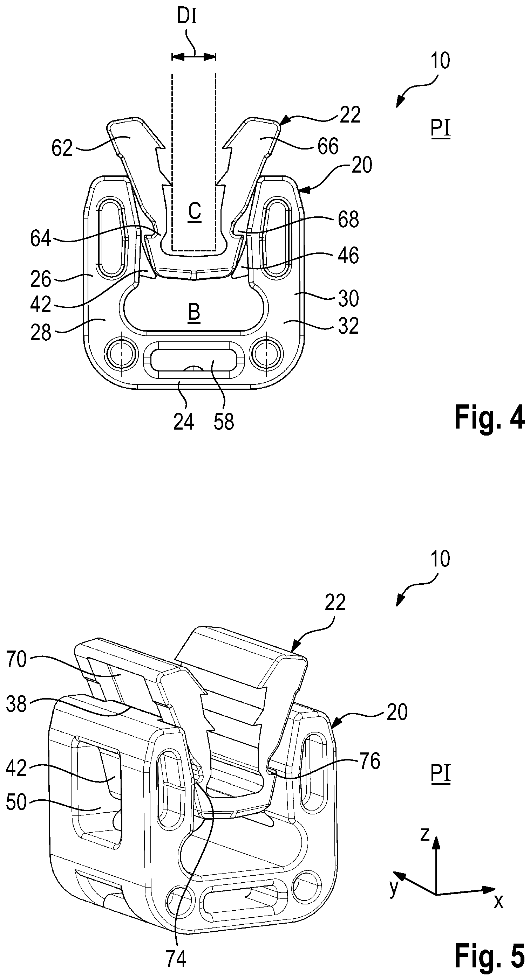

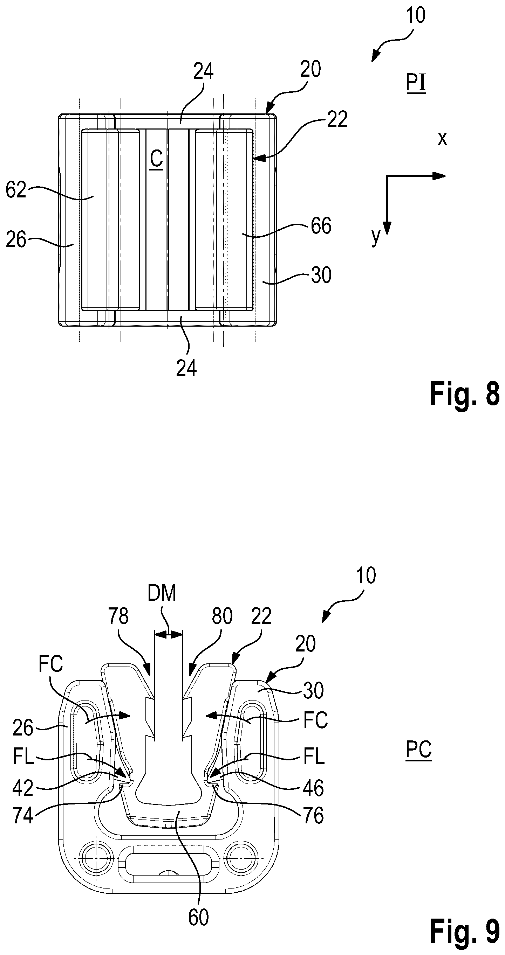

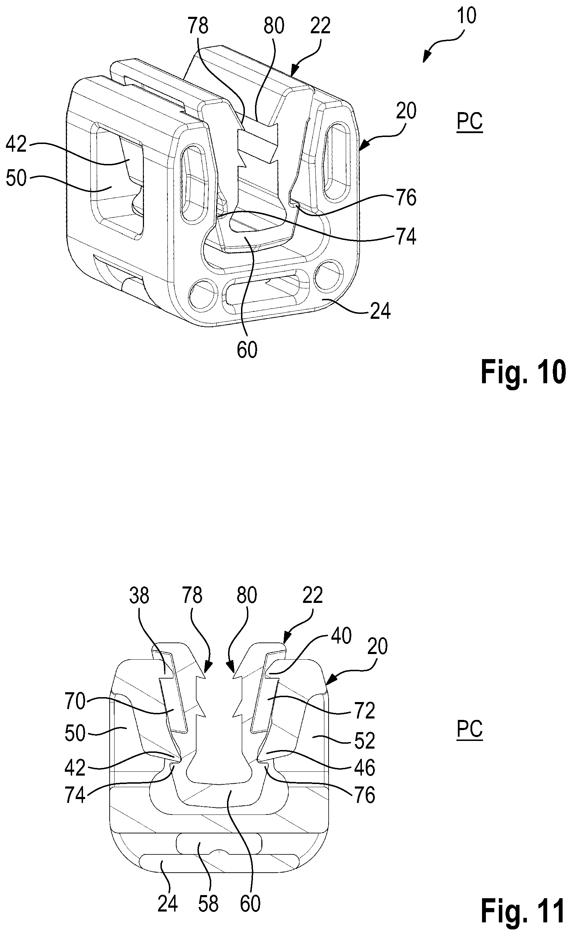

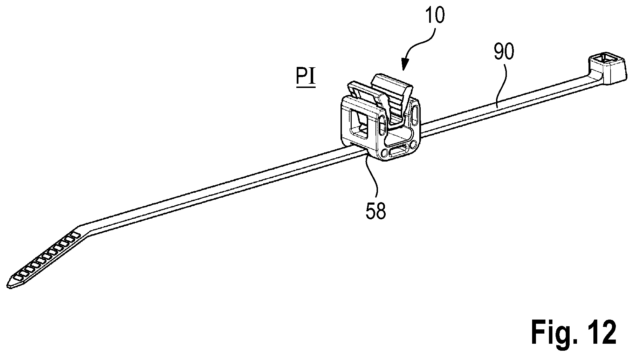

In Fig. 1, a fastening device according to an embodiment of the present disclosure is shown fastened to a web portion of a component. Figs. 2 to 4 show a fastener body and a clamping portion of the fastening device in a state separated from each other. Figs. 4 to 8 show the fastening device of Figs. 1 to 3 in an intermediate position PI. Figs. 9 to 11 show the fastening device of Figs. 1 to 3 in a clamping position PC. Fig. 12 shows the fastening device in the intermediate position, wherein a cable tie is premounted thereto.

In the figures, the fastening device is configured to be fastened to a component, and is given reference numeral 10.

Fig. 1 shows a component 12 which has a base portion 14 that is shown essentially horizontal, and a web portion 16 protruding perpendicularly from the base portion 14. The web portion 16 can be inserted into the fastening device in an insertion direction z. A transversal direction x is perpendicular to the insertion direction, and an axial direction y is perpendicular to z and to x.

The component 12 is made of a relatively soft material, which can be a plastic material or a foam material. In other embodiments, the component may be made of a metal material. For the purpose of fastening the fastening device 10 to the component, the surface of the component 12, particularly the surface of the web portion 16 is of concern, so that a core thereof may be made of a different material.

The fastening device 10 includes a fastener body 20 and a clamping portion 22.

The fastener body 20 is a gripper portion and includes a base body portion 24, a first body leg portion 26 connected to an end of the body base portion 24 via a first body leg hinge 28, and a second body leg portion 30 connected to an opposite end of the body base portion 24 via a second body leg hinge 32. The body base portion 24 and the first and second body leg portions 26, 30 together form a U-shape which is open in the insertion direction z. The first and second body leg portions 26, 30 extend in an insertion direction z. As shown in Fig. 1, the fastening device 10 includes an intermediate latch arrangement 34 for establishing an intermediate position PI, and a main latching arrangement 36 for establishing a clamping position PC, as will be explained in more detail below.

A first intermediate latching nose 38 is arranged on the first body leg portion 26, particularly in the area of a free end thereof. The first intermediate latching nose 38 protrudes transversely in a direction x (essentially perpendicular to the insertion direction) and faces the second body leg portion 30.

A second intermediate latching nose 40 is provided at an upper end of the second body leg portion 26, protrudes in the transversal direction x and faces the first body leg portion 26.

The first and second intermediate latching noses 38, 40 are part of the intermediate latching arrangement 34.

A first main latch 42 (latching tongue) is arranged on the first body leg portion 26 and is connected to the fastener body 20, particularly to the first body leg portion 26, via a first main latch hinge 44.

Correspondingly, a second main latch (latching tongue) 46 is arranged on the second body leg portion 30 and is connected thereto via a second main latch hinge 48.

A first latch deflection recess 50 is provided on the first body leg portion 26, and a second latch deflection recess 52 is provided on the second body leg portion 30. Each of the latch deflection recesses are formed as openings or through holes through the respective body leg portions 26, 30, respectively. The latch deflection recesses/openings 50, 52 each extend in the transversal direction x through the respective body leg portions 26, 30.

The first and second main latches 42, 46 are each connected to the respective body leg portions 26, 30 at an upper end/edge of the respective first and second latch deflection recesses/openings 50, 52.

In other words, the main latches 42, 46 are visible from the outside of the fastening device 10.

Optionally, the fastener body 20 can be provided with a number of additional recesses. For example, each of the body leg portions 26, 30 comprises axial recesses 54, and the body base portion comprises axial recesses 56.

The axial recesses 54, 56 are preferably provided for weight saving reasons, for reasons of adjusting elasticity, for injection molding reasons of avoiding portions which are too thick, etc.

In addition, the body base portion 24 comprises a mounting arrangement 58. In the present embodiment, the mounting arrangement 58 comprises an axial through hole 58, which extends in the axial direction y through the body base portion 24. The through hole is adapted to receive a cable tie, as can be seen in Fig. 12.

The clamping portion 22 comprises a clamping base portion 60, a first clamping leg portion 62 which is connected to one transversal end of the clamping base portion 60 by means of a first clamping leg hinge 64, and a second clamping leg portion 66 which is connected to an opposite end of the clamping base portion 60 via a second clamping leg hinge 68.

The clamping base portion 60 and the first and second clamping leg portions 62, 66 form a U-shape which is open in the insertion direction z.

The body leg hinges 28, 32 have a higher stiffness than the clamping leg hinges 64, 68.

The U-shape of the fastener body 20 defines a base receptacle B into which the clamping portion 22 can be inserted in the insertion direction z.

On the other hand, the U-shape of the clamping portion 22 defines a clamping receptacle C. The clamping receptacle C, in a non-deflected state, defines a transversal distance D0 in the transversal direction between the clamping leg portions 62, 66. The transversal direction D0 is essentially identical, slightly larger or slightly smaller than a transversal thickness T of the web portion 16 of the component 12, to which the fastening device 10 is to be fastened.

As can be seen in Fig. 2, a nose distance D1 between the intermediate latching noses 38, 40 is slightly smaller than a maximum transversal extension of the clamping base portion 60.

The first and second main latches 42, 46 are arranged at a latched distance D2 in the relaxed position of the fastener body 20. D2 is also smaller than the maximum transversal extension of the clamping base portion 60 in the transversal direction x.

A first intermediate latching recess is provided on a transversal outer side of the first clamping leg portion 62. Correspondingly, a second intermediate latching recess 72 is provided on a transversal outer side of the second clamping leg portion 66.

A transversal distance between the outer sides of the clamping leg portions 62, 66 at a lower end of the respective intermediate latching recesses 70, 72 is significantly less than the nose distance D1, so that the intermediate latching noses 38, 40 will latchingly engage in the intermediate latching recesses 70, 72 when the clamping portion 22 is inserted into the base receptacle B in an intermediate position PI, as shown in Figs. 4 to 8.

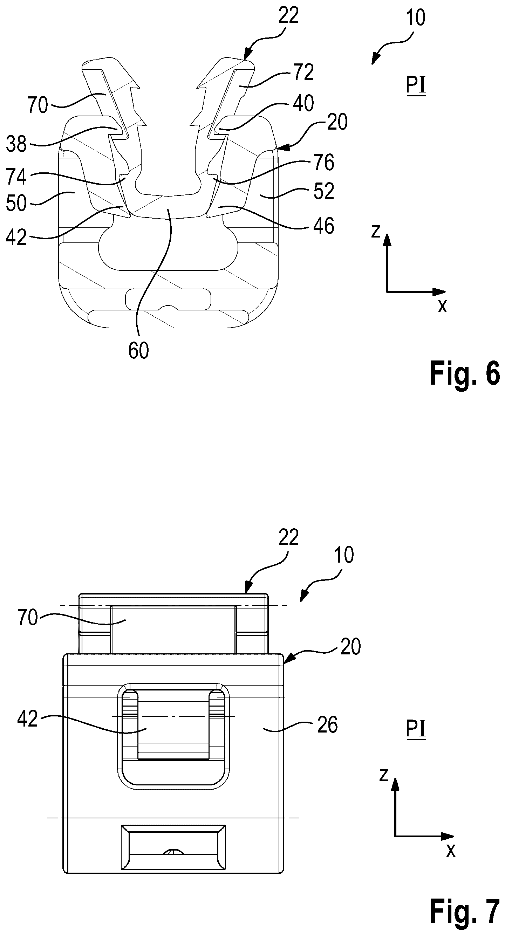

In particular, as shown for example in Fig. 4 or Fig. 6, when the clamping portion 22 is inserted into the base receptacle B, the body leg portions 26, 30 are elastically deflected, so that the latching noses 38, 40 can pass the clamping base portion 60 at insertion of the clamping portion 22, and engage into the respective intermediate latching recesses 70, 72. In the intermediate position PI, which is shown in Figs. 4 and 6, the clamping base portion 60 lies with its transversal ends at the - essentially non-deflected - main latches 42, 46, so that the intermediate position PI is a pre-mounting position in which the clamping portion 22 cannot move easily in the insertion direction z. Namely, a fairly high force is necessary in order to deflect the main latches 42, 46. In the intermediate portion PI, the main latches 42, 46 hold the lower edges of the intermediate latching recesses 70, 72 against lower ends of the intermediate latching noses 38, 40.

The clamping portion 22 further includes a first main latching shoulder 74 which is arranged between the first intermediate latching recess 70 and the clamping base portion 60 at a transversal outer side of the clamping leg portion 62. A corresponding second main latching shoulder 76 is provided on the second clamping leg portion 66, at an opposite transversal outer side thereof.

The main latching shoulders 74, 76, together with the main latches 42, 46, form the main latching arrangement 36. On the other hand, the intermediate latching noses 38, 40, together with the intermediate latching recesses 70, 72, form the intermediate latching arrangement 34.

On the inner sides of the clamping leg portions 62, 66, which face to each other, a respective first fastening arrangement 78 and a respective second fastening arrangement 80 are provided. In the present case, the fastening arrangements 78, 80 are formed by barbs which are able to cut into the relatively soft surface of the web portion 16, as is shown in Fig. 1.

In Figs. 4 to 8, the intermediate position PI is shown. Fig. 4 shows that a transversal distance DI between the clamping leg portions 62, 66 in the intermediate latching position is essentially identical to the transversal thickness T of the web portion 16, so that the web portion 16 can be easily inserted into the clamping receptacle C in the intermediate position PI.

Typically, the fastening device, in the intermediate position PI, is pushed onto the component 12, such that the web portion 16 enters the clamping receptacle C, as is schematically shown in Fig. 4.

At this stage, the free ends of the clamping leg portions 62, 66 lie against the base portion 14 of the component 12.

In order to transfer the fastening device 10 from the intermediate position PI to the clamping position as shown in Fig. 1 and in Figs. 9 to 11, the fastener body 20 is pushed with a fairly high force onto the clamping portion 22 which rests against the component 12. During this relative movement, the body leg portions 26, 30 are deflected transversely outwardly. The intermediate latching noses 38, 40 are able to freely move in the insertion direction within the intermediate latching recesses 70, 72, because the intermediate latching recesses 70, 72 have a dimension in the insertion direction which corresponds to the relative movement between the fastener body 20 and the clamping portion 22 from the intermediate position PI to the clamping position PC.

During the insertion of the clamping portion 22 into the base receptacle P, the clamping leg portions 62 are pressed together in the transversal direction, and the main latches 42, 46 are deflected outwardly in the transversal direction. During this process, the barbs cut into the web portion 16, and finally, the main latches (latching tongues) 42, 46 engage latchingly the main latching shoulders 74, 76 and move inwardly in the transversal direction so as to establish the clamping position PC.
In particular, the pressing force (clamping force FC) by the body leg portions 26, 28 is maintained and the clamping leg portions 62, 66 are pressed inwardly so as to grip the web portion 16 therebetween with a fairly high force. On the other hand, the pressing force of the body leg portions 26, 30 against the clamping leg portions 62, 66 is essentially independent of the latching engagement FL of the main latches 42, 46 at the main latching shoulders 74, 76.

The latching direction / force is shown at FL in Fig. 9. Correspondingly, the clamping force FC is also shown in Fig. 9.

In summary, a stable and firm connection of the fastening device 10 to the component 12 can be realized. Another, second, component can be connected thereto by use of the mounting arrangement, which in the present case includes the through hole 58 for receiving the cable tie.

### REFERENCE NUMERALS:

- 10: fastening device
- 12: component
- 14: base portion 12
- 16: web portion 12

- 20: fastener body (gripper)
- 22: clamping portion
- 24: body base portion 20
- 26: first body leg portion 20
- 28: first body leg hinge 24/26
- 30: second body leg portion 20
- 32: second body leg hinge 24/30
- 34: intermediate latching arrangement
- 36: main latching arrangement

- 38: first intermediate latching nose 26 (34)
- 40: second intermediate latching nose 30 (34)
- 42: first main latch (latching tongue) 26 (36)
- 44: first main latch hinge 26/42
- 46: second main latch (latching tongue) 30 (36)
- 48: second main latch hinge 30/46
- 50: first latch deflection recess 42 (opening, through hole)
- 52: second latch deflection recess 46 (opening, through hole)
- 54: axial recesses in leg portions
- 56: axial recesses in body base portion
- 58: mounting arrangement (through hole)

- 60: clamping base portion 22
- 62: first clamping leg portion 22
- 64: first clamping leg hinge 62
- 66: second clamping leg portion 22
- 68: second clamping leg hinge 66
- 70: first intermediate latching recess 62 (34)
- 72: second intermediate latching recess 66 (34)
- 74: first main latching shoulder 62 (36)
- 76: second main latching shoulder 66 (36)
- 78: first fastening arrangement (barbs) 62
- 80: second fastening arrangement (barbs) 66
- 90: cable tie (zip tie)
- B: base receptacle
- C: clamping receptacle
- T: transversal thickness web portion
- L: length web portion in z direction
- D0: transversal distance 62/66 in relaxed position
- DI: transversal distance 62/66 in intermediate latching position
- DM: transversal distance 62/66 in main latching position
- PI: intermediate position
- PC: clamping position

- D1: nose distance in relaxed position
- D2: latch distance in relaxed position
- FL: latching force
- FC: clamping force

- z: insertion direction
- y: axial direction
- x: transversal direction

## Claims

1. Fastening device (10) for fastening to a web portion of a component, comprising:
- a U-shaped fastener body (20) having a body base portion, a first body leg portion, and a second body leg portion, wherein the first and second body leg portions each extend from the body base portion such that a base receptacle (B) is defined between the first and second body leg portions (26, 30),
- a U-shaped clamping portion (22) having a clamping base portion, a first clamping leg portion, and a second clamping leg portion, wherein the first and second clamping leg portions each extend from the clamping base portion such that a clamping receptacle (C) for receiving the web portion (16) is defined between the first and second clamping leg portions (62, 66),
wherein the clamping portion (22) is configured to be inserted in an insertion direction (z) into the base receptacle (B) of the fastener body (20), so as to establish a clamping position (PC),
wherein the first and second clamping leg portions (62, 66) are pressed together in the clamping position (PC) by the first and second body leg portions (26, 30),
wherein the clamping portion (22) is held in the clamping position (PC) by a latch (42, 46) of a main latching arrangement (36), and
wherein the latch (42, 46) is movable with regard to the fastener body (20) and is connected to the fastener body (20) by a hinge (44, 48).

2. The fastening device of claim 1, wherein latch (42, 46) is formed integrally with the fastener body (20).

3. The fastening device of claim 1 or 2, wherein
- the fastener body (20) is integrally made of a plastic material, and/or
- the clamping portion (22) is integrally made of a plastic material,
wherein the plastic material of the fastener body (20) is preferably identical to the plastic material of the clamping portion (22).

4. The fastening device of any one of claims 1 to 3, wherein
- the first and second body leg portions (26, 30) are each connected to the body base portion (24) by a first body leg hinge (28) and a second body leg hinge (32), respectively, and/or
- the first and second clamping leg portions (62, 66) are each connected to the clamping base portion (60) by a first clamping leg hinge (64) and a second clamping leg hinge (68), respectively,
wherein a stiffness of the first and second clamping leg hinges (64, 68) is preferably lower than a stiffness of the first and second body leg hinges (28, 32).

5. The fasting device of any one of claims 1 to 4, wherein
- at least one of the first and second clamping leg portions (62, 66) is provided with a fastening arrangement (78, 80) for securely fastening to the web portion (16) in the clamping position (PC), wherein it is preferred if the fastening arrangement (78, 80) comprises at least one barb, and/or
- the fastener body is provided with a mounting arrangement (58), wherein it is preferred if the mounting arrangement (58) comprises a through hole in the body base portion (24).

6. The fastening device of any one of claims 1 to 5, wherein at least one of the first and second body leg portions (26, 30) comprises a latch deflection recess (50, 52) for allowing a deflection of the latch (42, 46) in a transversal direction (x) which is perpendicular to the insertion direction (z) in which the clamping portion (22) is inserted into the base receptacle (B).

7. The fastening device of any one of claims 1 to 6, wherein the clamping portion (22), when being partially inserted in the base receptacle (B), is held in an intermediate position (PI) by an intermediate latching arrangement (34).

8. The fastening device of claim 7, wherein the intermediate latching arrangement comprises at least one intermediate latching nose (38, 40) and at least one intermediate latching recess (70, 72), wherein the intermediate latching recess (70, 72) is formed as an elongated recess which is configured to hold the clamping portion (22) in the intermediate position (PI) and to allow to freely further insert the clamping portion (22) into the clamping position (PC).

9. The fastening device of claim 8, wherein
- the intermediate latching nose (38, 40) is provided on the fastener body (20), and wherein the intermediate latching recess (70, 72) is provided on the clamping portion (22), and/or
- wherein the clamping base portion (60) lies against the latch (42, 46) of the main latching arrangement (36) in the intermediate position.

10. The fastening device of any one of claims 1 to 9, wherein
- the fastener body (20) and the first and second body leg portions (26, 30) are integrally formed, wherein first and second body leg hinges (28, 32) therebetween are each formed by a respective reduced thickness portion of the fastener body (20), and/or
- the clamping portion (22) and the first and second clamping leg portions (62, 66) are integrally formed, wherein first and second clamping leg hinges (64, 68) therebetween are each formed by a respective reduced thickness portion of the clamping portion (22), and/or
- the latch (42, 46) is arranged between the intermediate latching nose (38, 40) and the body base portion (24) in the insertion direction, and/or
- a main latching shoulder (74, 76) of the main latching arrangement (56) is arranged between an intermediate latching recess (70, 72) of the intermediate latching arrangement (54) and the clamping base portion (60) in the insertion direction, and/or
- the intermediate latching recesses (70, 72) each have a dimension in the insertion direction (z) which corresponds to a relative movement between the fastener body (20) and the clamping portion (22) from the intermediate position (PI) to the clamping position (PC).
